# EUROPÄISCHE PATENTSCHRIFT

(11) **EP 1 277 258 B1**
(45) Veröffentlichungstag und Bekanntmachung des Hinweises auf die Patenterteilung: **15.09.2004**
(21) Anmeldenummer: 01919192.3
(22) Anmeldetag: 07.03.2001
(51) Int. Cl.: H02B 11/04, H01R 25/14

(54) **VERBINDER FÜR STROMSCHIENEN**
CONNECTOR FOR CONDUCTOR BARS
CONNECTEUR POUR BARRES OMNIBUS

(30) Priorität: 28.04.2000 DE 10022639
(43) Veröffentlichungstag der Anmeldung: 22.01.2003
(73) Patentinhaber: SIEMENS AKTIENGESELLSCHAFT, 80333 München (DE)
(72) Erfinder: BACH, Michael, 12437 Berlin (DE); SEBEKOW, Michael, 13125 Berlin (DE); SEIDLER-STAHL, Guenter, 13359 Berlin (DE); SCHMIDT, Detlev, 12055 Berlin (DE); THIEDE, Ingo, 12159 Berlin (DE); TUERKMEN, Sezai, 13629 Berlin (DE)
(86) Internationale Anmeldenummer: PCT/DE2001/000946
(87) Internationale Veröffentlichungsnummer: WO 2001/084684

(56) Entgegenhaltungen:
- EP-A- 0 434 349
- WO-A-99/22430
- US-A- 4 752 233
- US-A- 4 944 700
- US-A- 5 351 165

## Beschreibung

Die Erfindung betrifft Verbinder für Stromschienen, die vorzugsweise zur Verbindung von Stromschienen von Schaltgeräten mit anlagenseitigen Stromschienen in Schaltanlagen geeignet sind.

So sind beispielsweise bei Niederspannungs-Leistungsschaltern die Stromschienen im allgemeinen als horizontale Anschlussschienen ausgeführt. Sie treten flach, in horizontaler Richtung aus der Rückwand des Schalters heraus. Sie sind für eine horizontale Weiterführung der anlagenseitigen Stromschienen, zum Beispiel bei Einschubschaltern, gut geeignet. In vielen Fällen, nämlich beim Festeinbau in eine Schaltzelle, sind aber Vertikalanschlüsse an die senkrecht verlaufenden anlagenseitigen Stromschienen erforderlich, da im allgemeinen von der oben angeordneten Sammelschiene einer Schaltanlage die Stromschienen senkrecht zum Schalter geführt sind und vom Schalter auch wieder senkrecht nach unten über die Wandler zum Kabel verlaufen.

Es sind also separate Zubehörteile zur Anordnung zwischen den senkrecht verlaufenden anlagenseitigen Stromschienen und den horizontal verlaufenden Anschlussschienen des Leistungsschalters erforderlich, die an die Anschlussschienen des Leistungsschalters und die anlagenseitigen Stromschienen angeschraubt werden.

Bei einem bekannten elektrischen Schalter ist ein gattungsgemäßer Verbinder für zumindest eine erste und eine zweite Stromschiene, die jeweils zumindest eine Anschlussfläche zum Kontaktieren mit jeweils einer Kontaktfläche des Verbinders aufweisen, vorgesehen, wobei die Anschlussfläche der zweiten Stromschiene senkrecht zur Anschlussfläche der ersten Stromschiene und parallel zur Achse der Stromrichtung in der ersten Stromschiene verläuft (EP 0 434 349 A1). - bei diesem bekannten Verbinder sind der ersten Stromschiene zugeordnete Kontaktflächen von einem geformten Metallband und der zweiten Stromschiene zugeordnete Kontaktflächen von vier Kontaktfingern gebildet, wobei das Metallband und die Kontaktfinger mittels eines Federelementes miteinander leitend verbunden sind.

Es ist weiterhin bekannt, Verbinder für Stromschienen als massive Teile auszuführen, die jeweils nur für einen bestimmten Nennstrom geeignet sind. Daraus ergeben sich eine Vielzahl unterschiedlicher Teile und geringe Stückzahlen für die verschiedenen Stromstärken, verbunden mit hohen Teilekosten.

So zeigt die US-Patentschrift 3,287,534 einen großen Kompaktschalter, der stirnseitige Anschlüsse aufweist und speziell für den Einbau in Schaltanlagen geeignet ist. Bei diesem Schalter sind die Anschlüsse nicht aus dem Gehäuse herausgeführt, sondern es sind im Bereich der Gehäusewand Gewindebohrungen in den Anschlüssen vorgesehen. An diese sind mittels Schrauben jeweils Anschlussstücke mit je einer quadratischen Klemmfläche und im Quadrat angeordneten Befestigungslöchern angeschraubt. Von der genannten Klemmfläche ragt ein Verbindungssteg mit rechteckigem Querschnitt aus dem Schaltergehäuse heraus. Je nach der Stellung der quadratischen Klemmfläche zum Anschluss im Schaltgerät ist der Verbindungssteg horizontal oder Vertikal ausgerichtet und ermöglicht eine einfache Verbindung mit entsprechenden weiterführenden Stromschienen.

Die US-Patentschrift 5,196,987 zeigt eine andere mögliche Form der Überleitung von einer horizontalen Schienenführung auf eine vertikale, wobei kombinierbare Bauteile als Anschluss- und Verbindungsteile Verwendung finden. Diese Teile bestehen aus mehreren Einzelteilen und haben einen komplizierten Aufbau.

Bei diesen Lösungen sind abhängig von der Stromstärke viele unterschiedliche Teile erforderlich, was zu einer hohen Teilevielfalt und damit verbundenen hohen Teilekosten führt.

Ausgehend von einem Verbinder mit den Merkmalen des Oberbegriffes des Patentanspruches 1 (EP 0 434 349 A1) liegt der Erfindung die Aufgabe zugrunde, den Verbinder derart universell zu gestalten, dass Verbindungen zur Übertragung unterschiedlicher Stromstärken für im rechten Winkel zueinander verlaufende oder für fluchtende, um 90° um ihre Längsachsen gedrehte Stromschienen geschaffen werden können.

Diese Aufgabe wird gemäß der vorliegenden Erfindung dadurch gelöst, dass die beiden Kontaktflächen an jeweils einem Kontaktstück des Verbinders ausgebildet sind und dass die Kontaktstücke an jeweils senkrecht zu ihrer Kontäktfläche verlaufenden, bezüglich des jeweiligen Kontaktstücks außermittig gelegenen Seiten derart miteinander leitend verbunden sind, dass die Längsachsen (L₁, L₂) der beiden Kontaktstücke (17, 18) im rechten Winkel zueinander, aber in einem Abstand (A) voneinander verlaufen, so dass die Kontaktflächen der Kontaktstücke (17, 18) einander nicht überschneiden oder überdecken, sondern nebeneinander um 90° gegeneinander geschwenkt angeordnet sind.

Vorteilhaft weist wenigstens ein Kontaktstück auf der dem anderen Kontaktstück zugewandten Seite einen Ansatz auf. Zweckmäßig können auch beide Kontaktstücke auf der dem anderen Kontaktstück zugewandten Seite einen Ansatz aufweisen. Diese Ansätze dienen dazu, dass bei der Herstellung des Verbinders in ihnen jeweils ein Schlitz mit einer Breite vorgesehen wird, die der Dicke des anderen Kontaktstücks entspricht. In diesen Schlitz wird dann beim Zusammenbau des Verbinders das Gegenkontaktstück eingeschoben und durch ein geeignetes Befestigungsverfahren, wie Schweißen oder Löten fixiert. Damit wird die vorstehende Forderung realisiert, dass die Kontaktflächen der Kontaktstücke des Verbinders im zusammengebauten Zustand keine Überschneidung aufweisen, damit die im rechten Winkel mit ihnen zu verbindenden Stromschienen an ihnen problemlos vorbeigeführt werden können.

Darüber hinaus wird durch diese Befestigung eine höhere mechanische Festigkeit erzielt und weiterhin die Stromtragfähigkeit der Verbindung durch einen größeren leitenden Querschnitt erhöht. Beide wären beim Zusammenfügen nur an den Schmalseiten der Kontaktstücke möglicherweise nicht ausreichend.

Das erste Kontaktstück ist in vorteilhafter Ausgestaltung der Erfindung mit in Richtung seiner Längsachse angeordneten Langlöchern versehen, wodurch eine Verschiebbarkeit des Verbinders quer zur Achse der zu verbindenden Stromschiene ermöglicht wird.

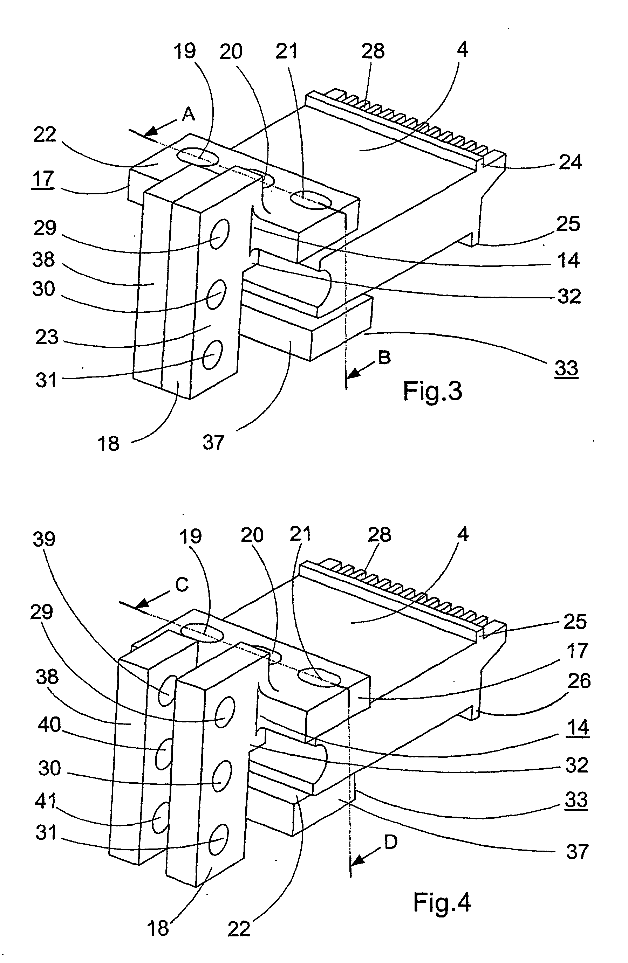

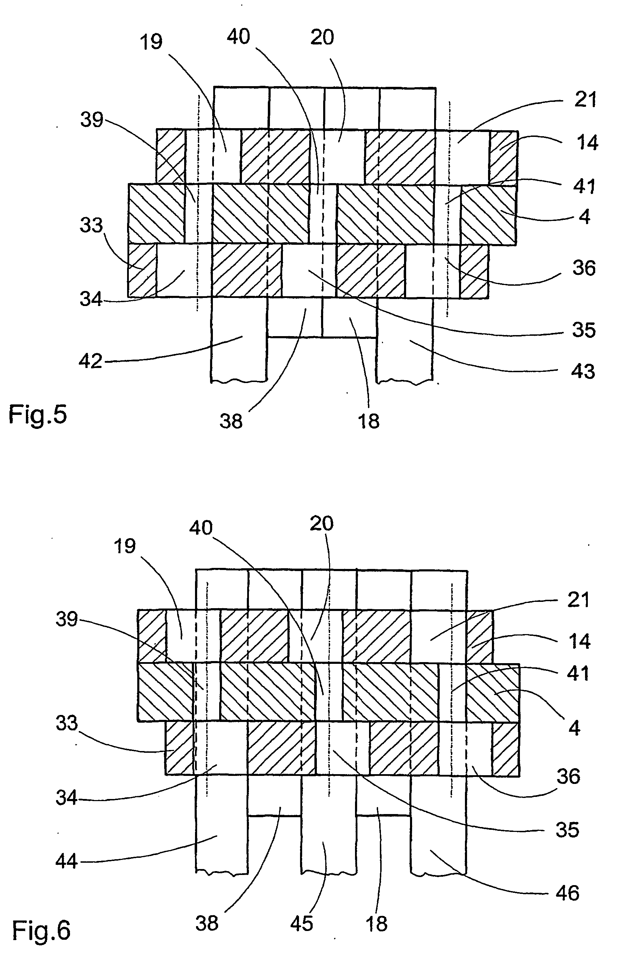

Dabei ist, insbesondere bei der Verwendung von zwei Verbindern, die Länge der Langlöcher gegebenenfalls abhängig von der Schienendicke der an den zweiten Kontaktstücken anzuschließenden Stromschienen, insbesondere dann, wenn drei Stromschienen angeschlossen werden sollen, von denen eine zwischen den zweiten Kontaktstücken der beiden Verbinder angeordnet ist, wie das im Bezug auf die Fig. 4 und 6 im nachfolgenden Ausführungsbeispiel ausführlich dargestellt ist.

Das zweite Kontaktstück ist in zweckmäßiger Ausführung mit in Richtung seiner Längsachse angeordneten Bohrungen versehen, mittels welcher die anzuschließenden anlagenseitigen Stromschienen angeschraubt werden können.

Vorteilhaft sind die Kontaktstücke in Richtung ihrer Längsachsen etwa so breit, wie die daran anzuschließenden beiderseits zu verbindenden Stromschienen. Da beispielsweise bei Niederspannungs-Leistungsschaltern Anschlussschienen angestrebt werden, die für alle Stromstärken gleiche Außenabmessungen aufweisen, ergibt sich in diesem Anwendungsbereich durch diese Anpassung keine erhöhte Teilevielfalt.

Durch die unsymmetrische Ausbildung des Verbinders und die Anordnung von Langlöchern in einem der beiden Kontaktstücke, kann, beispielsweise bei einer Verwendung des Verbinders zum Anschluss vertikaler anlagenseitiger Stromschienen an horizontal angeordnete Anschlussschienen von Niederspannungs-Leistungsschaltern, durch unterschiedliche Einbaulagen erreicht werden, dass wahlweise zwei derartige Verbinder, von unten und oben befestigt, so kombinierbar sind, dass die anlagenseitigen Kontaktstücke, an denen die anlagenseitigen Stromschienen angeschlossen sind, aneinander anliegen oder mit einem Abstand voneinander angeordnet sind. Dadurch ergibt sich eine Vielzahl von Anschlussmöglichkeiten für die anlagenseitigen Stromschienen, da an jeder Kontaktfläche auch zwei oder mehr Stromschienen übereinander angeschlossen werden können. Es sind somit dass alle gewünschten Anschlussvarianten erfüllbar.

Die Erfindung soll nachfolgend zum besseren Verständnis anhand von bevorzugten, den Schutzumfang nicht einschränkenden, Ausführungsbeispielen, unter Bezugnahme auf die zugehörige Zeichnung, näher erläutert werden. In den Beispielen wird der Gegenstand der Erfindung bei der Anwendung zur Verbindung horizontal verlaufender Anschlussschienen von Niederspannungs-Leistungsschaltern mit vertikal verlaufenden anlagenseitigen Stromschienen von Niederspannungs-Schaltanlagen beschrieben.

Die Fig.1 zeigt schematisch einen Niederspannungs-Leistungsschalter im Schnitt mit an den Anschlussschienen angeordneten erfindungsgemäßen Verbindern.

Die Fig. 2 zeigt eine bevorzugte Ausführungsform des erfindungsgemäßen Verbinders mit einer Anschlussschiene eines Niederspannungs-Leistungsschalters.

Die Fig. 3 zeigt eine Anordnung von zwei erfindungsgemäßen Verbindern an einer Anschlussschiene eines Niederspannungs-Leistungsschalters.

Die Fig. 4 zeigt eine weitere Anordnung von zwei erfindungsgemäßen Verbindern an einer Anschlussschiene eines Niederspannungs-Leistungsschalters.

Die Fig. 5 zeigt eine Schnittdarstellung gemäß der Schnittlinie A-B in der Fig. 3.

Die Fig. 6 zeigt eine Schnittdarstellung gemäß der Schnittlinie C-D in der Fig. 4.

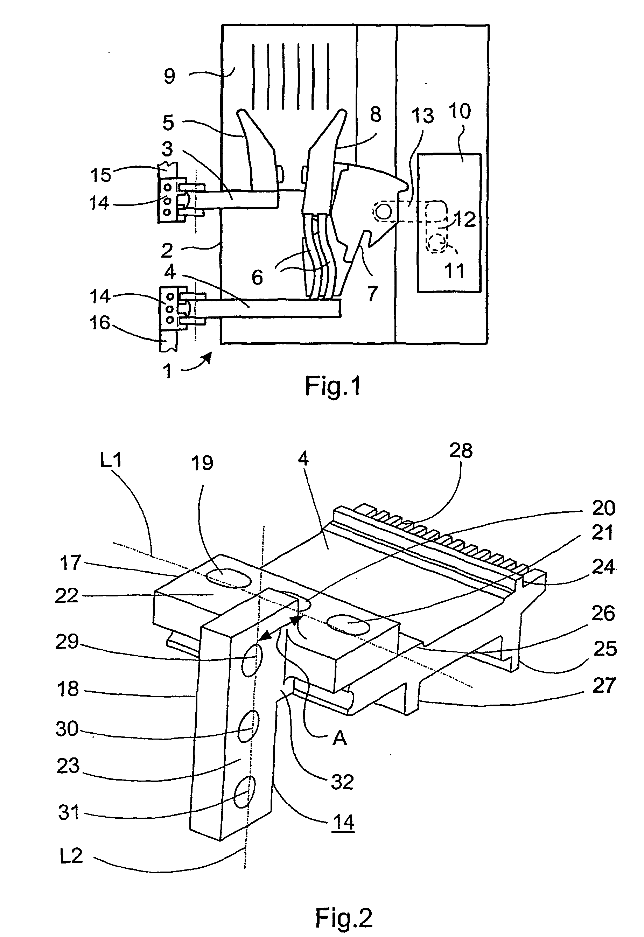

In der Fig. 1 ist schematisch ein Niederspannungs-Leistungsschalter 1 im Schnitt dargestellt. Durch die Rückwand 2 des Niederspannungs-Leistungsschalters 1 sind die obere Anschlussschiene 3 und die untere Anschlussschiene 4 hindurchgeführt. An der oberen Anschlussschiene 3 befindet sich der feste Schaltkontakt 5 und an der unteren Anschlussschiene 4 ist über flexible Leiterverbindungen 6 der auf einem Kontaktträger 7 befindliche bewegbare Schaltkontakt 8 angeschlossen. Über dem festen Schaltkontakt 5 und dem bewegbaren Schaltkontakt 8 ist die Lichtbogenlöschkammer 9 angeordnet. Im Schalterantrieb 10 befindet sich die Schaltwelle 11 mit dem Schaltwellenhebel 12, an welchem die Lasche 13 als Verbindungselement zum Kontaktträger 7 befestigt ist. An den Anschlussschienen 3 und 4 sind die erfindungsgemäßen Verbinder 14 angeschraubt, welche die Verbindung zwischen den horizontalen Anschlussschienen 3 und 4 des Niederspannungs-Leistungsschalters 1 und den vertikal verlaufenden anlagenseitigen Stromschienen 15 und 16 bilden.

Die Fig. 2 zeigt die Verbindung einer bevorzugten Ausführungsform des erfindungsgemäßen Verbinders 14 mit einer unteren Anschlussschiene 4 eines Niederspannungs-Leistungsschalters 1. An der unteren Anschlussschiene 4 sind Fortsätze 24, 25, 26, 27 zur Abstützung und Fixierung der unteren Anschlussschiene 4 am Schaltergehäuse zu erkennen und kammartige Aussparungen 28 zur Aufnahme der flexiblen Leiterverbindungen 6 zum bewegbaren Schaltkontakt.

In dieser Anordnung ist der Verbinder 14 zur Verbindung der horizontal verlaufenden unteren Anschlussschiene 4 mit einer nicht dargestellten vertikal verlaufenden anlagenseitigen Stromschiene konzipiert. Das schalterseitige Kontaktstück 17 des Verbinders 14 weist drei Langlöcher 19, 20, 21 auf, deren Funktion weiter unten beschrieben ist. Außermittig, zwischen dem mittlerem Langloch 20 und einem äußeren Langloch 21, ist am schalterseitigen Kontaktstück 17, in der Ebene um 90° geschwenkt, das anlagenseitige Kontaktstück 18 befestigt, und zwar so, dass die Längsachsen L1, L2 der beiden Kontaktstücke 17, 18 im rechten Winkel zueinander, aber in einem Abstand A voneinander verlaufen, wodurch sich die Kontaktfläche 22 des schalterseitigen Kontaktstückes 17 und die Kontaktfläche 23 des anlagenseitigen Kontaktstückes 18 räumlich nicht überschneiden, sondern nebeneinander angeordnet sind. Dadurch ist, wie in der Fig. 1 deutlich zu erkennen ist, ein problemloses Vorbeiführen der vertikalen anlagenseitigen Stromschiene 16 an der unteren Anschlussschiene 4 des Niederspannungs-Leistungsschalters 1 möglich.

Das anlagenseitige Kontaktstück 18, welches drei Bohrungen 29, 30, 31 zur Befestigung einer anlagenseitigen, vertikal verlaufenden, Stromschiene aufweist, ist ebenfalls außermittig, zwischen der mittleren Bohrung 30 und der äußeren Bohrung 29 am schalterseitigen Kontaktstück 17 befestigt. Zur sicheren Befestigung weist es eine Verbreiterung 32 auf, mittels welcher eine Verzahnung der beiden Kontaktstücke 17, 18 am Ort der Befestigung erfolgt. Die beiden Kontaktstücke 17, 18 werden nach der Positionierung in der Verzahnung durch Schweißen aneinander befestigt. Durch die zweifach außermittige Befestigung der Kontaktstücke 17, 18 miteinander wird der Verbinder universell verwendbar, wie nachfolgend beschrieben wird.

Die Fig.3 zeigt eine Anordnung von zwei erfindungsgemäßen Verbindern 14, 33 an einer unteren Anschlussschiene 4 eines Niederspannungs-Leistungsschalters 1. Gleiche Elemente der Anschlussschiene 4 sind mit den gleichen Bezugszeichen wie in der Fig.2 versehen, aber nicht nochmals erläutert. In dieser Kombination sind die Verbinder 14, 33 zur Verbindung der horizontal verlaufenden unteren Anschlussschiene 4 mit zwei nicht dargestellten vertikal verlaufenden anlagenseitigen Stromschiene konzipiert. Die Verbindung ist somit für höhere Stromstärken geeignet. Dabei ist der Verbinder 14 oben auf der Anschlussschiene 4 angeordnet und der Verbinder 33 unterhalb derselben.
Mit Hilfe der Langlöcher 19, 20, 21 des oben auf der Anschlussschiene 4 angeordneten Verbinders 14 und der Langlöcher 34, 35, 36 (Fig. 5 und 6) des unterhalb der Anschlussschiene 4 angeordneten Verbinders 33 sind diese, bei ein gesetzten, nicht dargestellten Schraubenbolzen, quer zur Achse der Anschlussschiene 4 parallel zueinander verschiebbar, wie das im Zusammenhang mit den Fig. 5 und 6 später erläutert wird.

Durch die außermittige Anordnung der Kontaktstücke 17, 18, 37, 38 der Verbinder 14, 33 zueinander und die dadurch vorhandenen ungleich langen Schenkel, sind bei der dargestellten, zusammengeschobenen Anordnung der Verbinder 14, 33 die anlagenseitigen Kontaktstücke 18, 38 aneinander anliegend parallel nebeneinander angeordnet, so dass auf jeder Seite außen mittels der Bohrungen 29, 30, 31 und der Bohrungen 39, 40, 41 (Fig.4) je eine anlagenseitige Stromschiene durch Anschrauben angeschlossen werden kann. Dabei wird der obere Verbinder 14 so angeordnet, dass sich der lange Schenkel des anlagenseitigen Kontaktstücks 18 nach unten erstreckt und der untere Verbinder 33 derart, dass der lange Schenkel des anlagenseitigen Kontaktstücks 38 nach oben gerichtet ist. Auf diese Weise können zwei im Abstand voneinander angeordneten anlagenseitigen Stromschienen problemlos angeschlossen werden.

Die Fig. 4 zeigt eine weitere Anordnung von zwei erfindungsgemäßen Verbindern 14, 33 an einer unteren Anschlussschiene 4 eines Niederspannungs-Leistungsschalters 1.

In dieser Kombination sind die Verbinder 14, 33 zur Verbindung der horizontal verlaufenden unteren Anschlussschiene 4 mit drei nicht dargestellten vertikal verlaufenden anlagenseitigen Stromschienen konzipiert. Die Verbindung kann somit noch höhere Stromstärken übertragen, als die Anordnung nach Fig. 3

Auch hier ist der Verbinder 14 oben auf der Anschlussschiene 4 angeordnet und der Verbinder 33 unterhalb derselben. Mit Hilfe der Langlöcher 19, 20, 21 des oben auf der Anschlussschiene 4 angeordneten Verbinders 14 und der Langlöcher 34, 35, 36 (Fig. 5 und 6) des unterhalb der Anschlussschiene 4 angeordneten Verbinders 33 sind diese, bei eingesetzten, nicht dargestellten Schraubenbolzen, quer zur Achse der Anschlussschiene 4 parallel zueinander verschiebbar, wie das im Zusammenhang mit den Fig. 5 und 6 später erläutert wird. Durch die außermittige Anordnung der Kontaktstücke 17, 18, 37, 38 der Verbinder 14, 33 zueinander und die dadurch vorhandenen ungleich langen Schenkel, sind bei der dargestellten, auseinandergeschobenen Anordnung der Verbinder 14, 33 die anlagenseitigen Kontaktstücke 18, 38 parallel nebeneinander, in einem Abstand voneinander angeordnet, welcher der Dicke einer anlagenseitigen Stromschiene entspricht.

Dadurch können auf jeder Seite der anlagenseitigen Kontaktstücke 18, 38 mittels der Bohrungen 29, 30, 31, 39, 40, 41 außen je eine Stromschiene angeschlossen werden und zwischen den beiden Kontaktstücken 18, 38 eine dritte Stromschiene. Dabei ist auch hier der obere Verbinder 14 so angeordnet, dass sich der lange Schenkel des anlagenseitigen Kontaktstücks 18 nach unten erstreckt und der untere Verbinder 33 derart, dass der lange Schenkel des anlagenseitigen Kontaktstücks 38 nach oben gerichtet ist. Auf diese Weise können problemlos drei im Abstand voneinander angeordneten anlagenseitige Stromschienen angeschlossen werden.

Die Fig.5 zeigt eine Schnittdarstellung gemäß der Schnittlinie A-B in der Fig.3, mit zwei hinzugefügten vertikal nach unten verlaufenden anlagenseitigen Stromschienen 42, 43.

Gemäß der Fig.3 ist oberhalb der mit Bohrungen 39, 40,41 versehenen Anschlussschiene 4 der Verbinder 14 mit den Langlöchern 19, 20, 21 angeordnet und unterhalb der Anschlussschiene 4 der Verbinder 33 mit den Langlöchern 34, 35, 36. Die Verbinder 14, 33 sind mittels der durch die Langlöcher 19, 20, 21, 34, 35, 36 gegebenen Bewegbarkeit so verschoben, dass sich ihre anlagenseitigen Kotaktstücke 18, 38 berühren. Hierdurch ergibt sich anlagenseitig ein aus diesen Kontaktstücken 18, 38 gebildeter Kontaktblock, an welchen, wie im Zusammenhang mit der Fig.3 beschrieben, zwei im Abstand voneinander angeordnete anlagenseitige Stromschienen 42, 43 angeschlossen werden können.

Die Fig. 6 zeigt eine Schnittdarstellung gemäß der Schnittlinie C-D in der Fig. 4, mit drei hinzugefügten vertikal nach unten verlaufenden anlagenseitigen Stromschienen 44, 45, 46.

Gemäß der Fig. 4 ist oberhalb der mit Bohrungen 39, 40,41 versehenen Anschlussschiene 4 der Verbinder 14 mit den Langlöchern 19, 20, 21 angeordnet und unterhalb der Anschlussschiene 4 der Verbinder 33 mit den Langlöchern 34, 35, 36. Die Verbinder 14, 33 sind mittels der durch die Langlöcher 19, 20, 21, 34, 35, 36 gegebenen Bewegbarkeit so verschoben, dass ihre anlagenseitigen Kontaktstücke 18, 38 parallel nebeneinander, in einem Abstand voneinander angeordnet sind, welcher der Dicke einer anlagenseitigen Stromschiene entspricht. Dadurch können auf jeder Seite der anlagenseitigen Kontaktstücke 18, 38 außen je eine anlagenseitige Stromschiene 44, 46 angeschlossen werden und zwischen den beiden Kontaktstücken 18, 38 eine dritte anlagenseitige Stromschiene 45, wie das unter Bezugnahme auf die Fig. 4 bereits beschrieben wurde.

Die Vorteile des erfindungsgemäßen Verbinders bestehen in seiner universellen Verwendbarkeit. Es können nicht nur in einem Winkel zueinander verlaufende Stromschienen miteinander verbunden werden, sondern auch fluchtende um ihre Längsachse um 90° gedrehte Stromschienen. Dabei können, über die beschriebenen Beispiele hinaus, an jedem zweiten Kontaktstück an jeder Kontaktfläche auch zwei oder mehr Stromschienen übereinander angeschlossen werden, so dass alle gewünschten Anschlussvarianten erfüllbar sind.

## Patentansprüche

1. Verbinder für zumindest eine erste und eine zweite Stromschiene, die jeweils zumindest eine Anschlussfläche zum Kontaktieren mit jeweils einer Kontaktfläche des Verbinders aufweisen, wobei die Anschlussfläche der zweiten Stromschiene senkrecht zur Anschlussfläche der ersten Stromschiene und parallel zur Achse der Stromrichtung in der ersten Stromschiene verläuft,
**dadurch gekennzeichnet,**
**dass** die beiden Kontaktflächen (22, 23) an jeweils einem Kontaktstück (17, 18) des Verbinders ausgebildet sind und
**dass** die Kontaktstücke (17, 18) an jeweils senkrecht zu ihrer Kontaktfläche verlaufenden, bezüglich des jeweiligen Kontaktstücks außermittig gelegenen Seiten derart miteinander leitend verbunden sind, dass die Längsachsen (L₁, L₂) der beiden Kontaktstücke (17, 18) im rechten Winkel zueinander, aber in einem Abstand (A) voneinander verlaufen, so dass die Kontaktflächen der Kontaktstücke (17, 18) einander nicht überschneiden oder überdecken, sondern nebeneinander um 90° gegeneinander geschwenkt angeordnet sind.

2. Verbinder nach Anspruch 1,
**dadurch gekennzeichnet,**
**dass** wenigstens ein Kontaktstück (17, 18) auf der dem anderen Kontaktstück (18, 17) zugewandten Seite einen Ansatz aufweist.

3. Verbinder nach Anspruch 1,
**dadurch gekennzeichnet,**
**dass** beide Kontaktstücke (17, 18) auf der dem jeweils anderen Kontaktstück (18, 17) zugewandten Seite einen Ansatz aufweisen.

4. Verbinder nach einem der Ansprüche 1 bis 3,
**dadurch gekennzeichnet,**
**dass** das erste der beiden Kontaktstücke (17; 37) zu seiner Befestigung an der ersten Stromschiene (4) mit Langlöchern (19, 20, 21; 34, 35 36) versehen ist, die entlang einer ihnen gemeinsamen Längsachse (L1) ausgerichtet sind,
wobei die Längsachse (L1) senkrecht zur Kontaktfläche (23) des zweiten Kontaktstückes (18; 38) verläuft.

5. Verbinder nach einem der Ansprüche 1 bis 4,
**dadurch gekennzeichnet,**
**dass** das zweite Kontaktstück (18; 38) zu seiner Befestigung an der zweiten Stromschiene (43; 42) mit entlang einer gemeinsamen Längsachse (L2) ausgerichteten Bohrungen (29, 30, 31; 39, 40, 41) versehen ist,
wobei die Längsachse (L2) senkrecht zur Kontaktfläche (22) des ersten Kontaktstückes (17; 37) verläuft.

6. Verbinder nach einem der Ansprüche 1 bis 5,
**dadurch gekennzeichnet,**
**dass** jeweils die Kontaktfläche des Kontaktstückes (17; 18) und die Anschlussfläche der Stromschiene (4; 43), an der sie anliegt, senkrecht zur Achse der Stromrichtung in dieser Stromschiene etwa gleich breit sind.

7. Verbinder nach einem der Ansprüche 1 bis 6,
**dadurch gekennzeichnet,**
**dass** das an der ersten Stromschiene (4) anliegende erste Kontaktstück (17) gegenüber einer mittigen Anordnung an dem an der zweiten Stromschiene (43) anliegenden zweiten Kontaktstück (18) derart versetzt ist, dass
bei Anschluss des Verbinders an eine zweite Anschlusseite der ersten Stromschiene (4) in um 180° um die Achse der Stromrichtung in dieser Stromschiene gedrehter Position, die zweite Kontaktfläche (23) gegenüber ihrer Position vor der Drehung bezüglich ihrer Flächennormalen im wesentlichen fluchtend angeordnet ist.

8. Verbinder nach einem der Ansprüche 1 bis 7,
**dadurch gekennzeichnet,**
**dass** das an der zweiten Stromschiene (43) anliegende zweite Kontaktstück (18) gegenüber einer mittigen Anordnung an dem an der ersten Stromschiene (4) anliegenden ersten Kontaktstück (17) derart versetzt ist, dass
bei Anordnung eines gegenüber dem ersten Verbinder (14) um 180° um die Achse der Stromrichtung in der ersten Stromschiene geschwenkten zweiten Verbinders (33) und
bei sowohl aneinander anliegenden als auch um einen Wert, der der Dicke der zweiten Stromschiene (45) senkrecht zu ihrer Anschlussfläche entspricht, beabstandeten zweiten Kontaktflächen,
die ersten Kontaktflächen (22) die ersten Anschlussflächen nicht in Richtung senkrecht zur Achse der Stromrichtung in der ersten Stromschiene überragen.

## Claims

1. Connector for at least one first and one second busbar which each have at least one connecting surface for making contact with in each case one contact surface of the connector, with the connecting surface of the second busbar running at right angles to the connecting surface of the first busbar, and parallel to the axis of the current direction in the first busbar,
**characterized**
**in that** the two contact surfaces (22, 23) are formed on in each case one contact piece (17, 18) of the connector, and in that the contact pieces (17, 18) are conductively connected to one another on faces which in each case run at right angles to their contact surface and are located eccentrically with respect to the respective contact piece, such that the longitudinal axes (L₁, L₂) of the two contact pieces (17, 18) run at right angles to one another, but at a distance (A) from one another, so that the contact surfaces of the contact pieces (17, 18) do not intersect or cover one another, but are arranged swivelled through 90° with respect to one another, alongside one another.

2. Connector according to Claim 1,
**characterized**
**in that** at least one contact piece (17, 18) has an attachment on the side facing the other contact piece (18, 17).

3. Connector according to Claim 1,
**characterized**
**in that** both contact pieces (17, 18) have an attachment on the side facing the respective other contact piece (18, 17).

4. Connector according to one of Claims 1 to 3,
**characterized**
**in that** the first of the two contact pieces (17; 37) is provided with elongated holes (19, 20, 21; 34, 35 36) for its attachment to the first busbar (4) which elongated holes (19, 20, 21; 34, 35 36) are aligned along a longitudinal axis (L1) which is shared by them, with the longitudinal axis (L1) running at right angles to the contact surface (23) of the second contact piece (18; 38).

5. Connector according to one of Claims 1 to 4,
**characterized**
**in that** the second contact piece (18; 38) is provided with holes (29, 30, 31; 39, 40, 41) which are aligned along a common longitudinal axis (L2), for its attachment to the second busbar (43; 42),
with the longitudinal axis (L2) running at right angles to the contact surface (22) of the first contact piece (17; 37).

6. Connector according to one of Claims 1 to 5,
**characterized**
**in that** the contact surface of the contact piece (17; 18) and the connecting surface of the busbar (4; 43) on which it rests each have approximately the same width at right angles to the axis of the current direction in this busbar.

7. Connector according to one of Claims 1 to 6,
**characterized**
**in that** the first contact piece (17), which rests on the first busbar (4), is offset with respect to a central arrangement on the second contact piece (18), which rests on the second busbar (43), such that, on connection of the connector to a second connecting side of the first busbar (4) in a position rotating through 180° about the axis of the current direction in this busbar, the second contact surface (23) is arranged essentially aligned with respect to its position before the rotation with respect to its surface normal.

8. Connector according to one of Claims 1 to 7,
**characterized**
**in that** the second contact piece (18), which rests on the second busbar (43), is offset with respect to a central arrangement on the first contact piece (17), which rests on the first busbar (4), such that when a second connector (33) is arranged such that it is swivelled through 180° with respect to the first connector (14) about the axis of the current direction in the first busbar, and in the case of second contact surfaces which not only rest on one another but are also separated by a value which corresponds to the thickness of the second busbar (45) at right angles to its connecting surface
the first contact surfaces (22) do not overhang the first connecting surfaces in the direction at right angles to the axis of the current direction in the first busbar.

## Revendications

1. Connecteur pour au moins une première et une seconde barre omnibus, qui présentent chacune au moins une surface de connexion pour assurer le contact avec respectivement une surface de contact du connecteur, la surface de connexion de la seconde barre omnibus s'étendant perpendiculairement à la surface de connexion de la première barre omnibus et parallèlement à l'axe de la direction de courant dans la première barre omnibus,
**caractérisé en ce que** les deux surfaces de contact (22, 23) sont réalisées respectivement sur une pièce de contact (17, 18) du connecteur, et **en ce que** les pièces de contact (17, 18) sont reliées mutuellement de manière conductrice, sur des côtés s'étendant respectivement perpendiculairement à leur surface de contact et étant décentrés relativement à la pièce de contact respectivement correspondante, de façon telle que les axes longitudinaux (L₁, L₂) des deux pièces de contact (17, 18) s'étendent à angle droit l'un par rapport à l'autre, mais à une distance (A) l'un de l'autre, de sorte que les surfaces de contact des pièces de contact (17, 18) ne se chevauchent ou ne se recouvrent pas, mais sont disposées l'une à côté de l'autre en étant tournées de 90° l'une par rapport à l'autre.

2. Connecteur selon la revendication 1, **caractérisé en ce qu'**au moins une pièce de contact (17, 18) comporte sur son côté dirigé vers l'autre pièce de contact (18, 17), un appendice.

3. Connecteur selon la revendication 1, **caractérisé en ce que** les deux pièces de contact (17, 18) comportent sur leur côté dirigé respectivement vers l'autre pièce de contact (18, 17), un appendice.

4. Connecteur selon l'une des revendications 1 à 3, **caractérisé en ce que** la première des deux pièces de contact (17 ; 37) est pourvue, pour sa fixation à la première barre omnibus (4), de trous oblongs (19, 20, 21; 34, 35, 36), qui sont orientés le long d'un axe longitudinal (L₁) qui leur est commun, l'axe longitudinal (L₁) s'étendant perpendiculairement à la surface de contact (23) de la seconde pièce de contact (18; 38).

5. Connecteur selon l'une des revendications 1 à 4, **caractérisé en ce que** la seconde pièce de contact (18; 38) est pourvue, pour sa fixation à la seconde barre omnibus (43; 42), de trous (29, 30, 31; 39, 40, 41) orientés le long d'un axe longitudinal (L₂) commun, l'axe longitudinal (L₂) s'étendant perpendiculairement à la surface de contact (22) de la première pièce de contact (17; 37).

6. Connecteur selon l'une des revendications 1 à 5, **caractérisé en ce que** la surface de contact respective de la pièce de contact (17; 18) et la surface de connexion de la barre omnibus (4; 43) sur laquelle elle s'appuie, sont environ d'une même largeur perpendiculairement à l'axe de la direction du courant dans cette barre omnibus.

7. Connecteur selon l'une des revendications 1 à 6, **caractérisé en ce que** la première pièce de contact (17) s'appuyant sur la première barre omnibus (4) est décalée par rapport à une disposition centrée sur la seconde pièce de contact (18) s'appuyant sur la seconde barre omnibus (43), de façon telle que pour un raccordement du connecteur à un second côté de raccordement de la première barre omnibus (4) dans une position tournée de 180° autour de l'axe de la direction du courant dans cette barre omnibus, la seconde surface de contact (23) soit disposée, par rapport à sa position avant la rotation, sensiblement de manière alignée relativement à la normale à sa surface.

8. Connecteur selon l'une des revendications 1 à 7, **caractérisé en ce que** la seconde pièce de contact (18) s'appuyant sur la seconde barre omnibus (43), est décalée par rapport à une disposition centrée sur la première pièce de contact (17) s'appuyant sur la première barre omnibus (4), de façon telle que pour une disposition d'un second connecteur (33) tourné de 180° autour de l'axe de la direction du courant dans la première barre omnibus, et pour des secondes surfaces de contact aussi bien appliquées mutuellement l'une sur l'autre, qu'espacées d'une valeur qui correspond à l'épaisseur de la seconde barre omnibus (45) perpendiculairement à sa surface de connexion, les premières surfaces de contact (22) ne dépassent par les premières surfaces de connexion dans la direction perpendiculaire à l'axe de la direction du courant dans la première barre omnibus.
